# EUROPEAN PATENT APPLICATION

(11) **EP 4 769 333 A1**
(43) Date of publication of application: **01.07.2026**
(21) Application number: 25172272.4
(22) Date of filing: 24.04.2025
(51) Int. Cl.: G06V 10/82, G06V 40/16

(54) **INFORMATION PROCESSING SYSTEM AND INFORMATION PROCESSING PROGRAM**

(30) Priority: 26.12.2024 JP 2024231353
(71) Applicant: FUJIFILM Business Innovation Corp., Minato-ku Tokyo (JP)
(72) Inventor: SHIMOYAMA, Seiji, Tokyo (JP); KONO, Takeru, Tokyo (JP); OZAWA, Nemu, Tokyo (JP); BUJO, Makiko, Tokyo (JP)
(74) Representative: Becker Kurig & Partner Patentanwälte mbB

(57) **Abstract**

An information processing system includes a processor, in which the processor is configured to use an estimation model that is trained through machine learning, using plural training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and output the type of processing, the processed positional information, and the unprocessed positional information for the new image.

## Description

### BACKGROUND OF THE INVENTION

### (i) Field of the Invention

The present disclosure relates to an information processing system and an information processing program.

### (ii) Description of Related Art

JP2019-092025A discloses an editing system including an editing device that edits a video file used for broadcasting, the editing system including a face image accumulation server that acquires a face image of a performer included in the video file and records the face image and time code information of a performance video of each performer in association with each other, a performance video detection unit that compares the face image recorded in the face image accumulation server with a face image, which is a search target, included in a video file of a specific program to detect a performance video in the specific program, and a similar face image detection device that detects another performance video in which a person of the face image, which is the search target, performs in the specific program by using similar face image search based on the performance video detected by the performance video detection unit, and notifies the editing device of the time code information of the detected performance video in association with performer information of the search target, in which the editing device edits the video file of the specific program using the time code information.

### SUMMARY OF THE INVENTION

A feature portion of a person is extracted from an image using a well-known extraction technique, and the extracted feature portion may be processed. The extracted feature portions may include portions that are not to be processed, but in the extraction technique in the related art, since information representing whether or not processing is necessary for the extracted feature portions is not included, the feature portions that are not to be processed are also targets to be processed like other feature portions.

An object of the present disclosure is to provide an information processing system and an information processing program capable of estimating a feature portion that is better to be processed and a feature portion that does not need to be processed for a person included in an image by distinguishing the feature portions.

According to a first aspect of the present invention, there is provided an information processing system includes a processor configured to use an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and output the type of processing, the processed positional information, and the unprocessed positional information for the new image.

According to a second aspect of the present invention, in the information processing system according to the first aspect, the processor may be configured to output the type of processing, the processed positional information, and the unprocessed positional information for the new image together with the new image before the processing.

According to a third aspect of the present invention, in the information processing system according to the second aspect, the processor may be configured to not execute image processing represented by the estimated type of processing with respect to a position representing the feature portion of the person in the new image represented by the estimated unprocessed positional information, and execute image processing represented by the estimated type of processing with respect to a position representing the feature portion of the person in the new image represented by the estimated processed positional information, and further output the processed new image.

According to a fourth aspect of the present invention, in the information processing system according to any one of the first to third aspects, the estimation model may be a model that is prepared for each person and that is trained through machine learning using only the plurality of training data including first images including the same person, and identification information for identifying the person included in the first image constituting the training data used for the machine learning is associated with each estimation model, and the processor may be configured to estimate the type of processing, the processed positional information, and the unprocessed positional information from the new image using the estimation model associated with the identification information of the person included in the new image.

According to a fifth aspect of the present invention, in the information processing system according to the fourth aspect, the processor may be configured to superimpose and output a mark representing a position of the feature portion of the person in the new image represented by the estimated processed positional information and a position of the feature portion of the person in the new image represented by the estimated unprocessed positional information on at least one of the new image before the processing or the new image after the processing.

According to a sixth aspect of the present invention, in the information processing system according to the fifth aspect, the processor may be configured to output a first mark that is the mark representing the position of the feature portion of the person in the new image represented by the estimated unprocessed positional information and a second mark that is the mark representing the position of the feature portion of the person in the new image represented by the estimated processed positional information, in different display forms.

According to a seventh aspect of the present invention, in the information processing system according to the sixth aspect, the processor may be configured to, in a case where a predetermined operation for the first mark is received from a user, change the first mark in which the predetermined operation is performed to the second mark and change the unprocessed positional information associated with the mark changed from the first mark to the second mark to the processed positional information; and in a case where the predetermined operation for the second mark is received from the user, change the second mark in which the predetermined operation is performed to the first mark and change the processed positional information associated with the mark changed from the second mark to the first mark to the unprocessed positional information.

According to an eighth aspect of the present invention, in the information processing system according to the seventh aspect, the processor may be configured to, in a case where another new image including the same person as the person included in the new image in which the predetermined operation is performed is received, carry over a setting status of the first mark and the second mark in the new image in which the predetermined operation is performed to the other new image.

According to a ninth aspect of the present invention, in the information processing system according to any one of the fifth to eighth aspects, the processor may be configured to output the new image on which a character string representing the position of the feature portion of the person in the new image associated with the mark is superimposed together with the mark.

According to a tenth aspect of the present invention, in the information processing system according to any one of the fifth to ninth aspects, the processor may be configured to identify an attribute of the feature portion of the person in the new image from the new image, and superimpose and output the mark whose display form is changed for each attribute on at least one of the new image before the processing or the new image after the processing.

According to an eleventh aspect of the present invention, in the information processing system according to the tenth aspect, the processor may be configured to superimpose and output the mark corresponding to the attribute having a largest number among attributes identified from the new image on at least one of the new image before the processing or the new image after the processing.

According to a twelfth aspect of the present invention, in the information processing system according to the eleventh aspect, the processor may be configured to, in a case where an output instruction to output the mark corresponding to another attribute different from the mark being output is received from a user, further superimpose and output the mark corresponding to the attribute having a next largest number after the attribute represented by the mark being output among the attributes identified from the new image, on at least one of the new image before the processing or the new image after the processing.

According to a thirteenth aspect of the present invention, in the information processing system according to any one of the fourth to twelfth aspects, the processor may be configured to, in a case where the new image includes a plurality of persons, estimate the type of processing, the processed positional information, and the unprocessed positional information for each person from the new image using the estimation model in which the identification information of each person is associated with each person included in the new image.

According to a fourteenth aspect of the present invention, in the information processing system according to the thirteenth aspect, in a case where the estimation model associated with the identification information of the person does not exist, the processor may be configured to estimate the type of processing, the processed positional information, and the unprocessed positional information for a person included in the new image with which the identification information is not associated, using a standard estimation model, which is the estimation model that is trained through machine learning using the plurality of training data including the first images that include different persons, with respect to the person to whom the estimation model is not associated.

According to a fifteenth aspect of the present invention, in the information processing system according to any one of the first to fourteenth aspects, the processor may be configured to perform additional processing on each of new images processed by using the estimation model in accordance with a predetermined common processing rule for each person included in the new image.

According to a sixteenth aspect of the present invention, in the information processing system according to any one of the first to fifteenth aspects, the estimation model may be a model that is trained through machine learning using the training data in which a degree of processing performed on the first image to obtain the second image is further associated with the first image, and the processor may be configured to estimate the type of processing, the degree of processing, the processed positional information, and the unprocessed positional information from the new image by using the estimation model, and output the type of processing, the degree of processing, the processed positional information, and the unprocessed positional information for the new image.

According to a seventeenth aspect of the present invention, there is provided an information processing program causing a computer to execute a process including using an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person, and outputting the type of processing, the processed positional information, and the unprocessed positional information for the new image.

According to the first aspect and the seventeenth aspect of the present invention, there is an effect that it is possible to distinguish and estimate a feature portion that is better to be processed and a feature portion that does not need to be processed for a person included in an image.

According to the second aspect of the present invention, there is an effect that it is possible to confirm the estimated type of processing, the processed positional information, and the unprocessed positional information while referring to the new image.

According to the third aspect of the present invention, there is an effect that it is possible to confirm a new image in which image processing represented by the type of processing is executed with respect to the position represented by the processed positional information.

According to the fourth aspect of the present invention, there is an effect of improving estimation accuracy of the type of processing, the processed positional information, and the unprocessed positional information for the new image, as compared with a case of using the estimation model generated from the training data including the first image including the plurality of persons.

According to the fifth aspect of the present invention, there is an effect that it is possible to grasp the position of the feature portion estimated by the information processing system from the image.

According to the sixth aspect of the present invention, there is an effect that it is possible to grasp each feature portion from the image by distinguishing the feature portion to be processed and the feature portion not to be processed.

According to the seventh aspect of the present invention, there is an effect that in a case where the estimation result regarding whether or not to process any feature portion is different from the intention of the user, the user can set the feature portion to be processed or the feature portion not to be processed in accordance with the intention of the user.

According to the eighth aspect of the present invention, there is an effect that it is possible to set the feature portion to be processed or the feature portion not to be processed in accordance with the intention of the user, without setting the feature portion to be processed or the feature portion not to be processed by the user each time.

According to the ninth aspect of the present invention, there is an effect that the position of the feature portion can be more accurately grasped than a case where the position of the feature portion is indicated only by the mark.

According to the tenth aspect of the present invention, there is an effect that it is possible to grasp a position of the feature portion of a person and an attribute of the feature portion.

According to the eleventh aspect of the present invention, there is an effect that it is possible to output only the main attribute among the different attributes.

According to the twelfth aspect of the present invention, there is an effect that it is possible to output the feature portion for each attribute.

According to the thirteenth aspect of the present invention, there is an effect of improving the estimation accuracy as compared with a case where the type of processing, the processed positional information, and the unprocessed positional information are estimated for each person using the same estimation model.

According to the fourteenth aspect of the present invention, there is an effect that even in a case where the estimation model associated with the person does not exist, it is possible to estimate the type of processing, the processed positional information, and the unprocessed positional information for the person to which the estimation model is not associated.

According to the fifteenth aspect of the present invention, there is an effect that it is possible to unify the atmosphere of each new image in which the same person is included after processing.

According to the sixteenth aspect of the present invention, there is an effect that it is possible to further estimate a degree of processing in addition to the type of processing, the processed positional information, and the unprocessed positional information for the new image.

### BRIEF DESCRIPTION OF THE DRAWINGS

Exemplary embodiment(s) of the present invention will be described in detail based on the following figures, wherein:
Fig. 1 is a diagram showing image examples of a person;
Fig. 2 is a diagram showing an example of a functional configuration of a terminal constituting an information processing system;
Fig. 3 is a diagram showing an example of generation of training data used for machine learning of an estimation model;
Fig. 4 is a diagram showing an example of generation of training data using a generative model;
Fig. 5 is a diagram showing a configuration example of a main part of an electrical system of a terminal configured by using a computer;
Fig. 6 is a flowchart showing an example of a flow of estimation processing of processing information;
Fig. 7 is a diagram showing an example of an editing screen;
Fig. 8 is a diagram showing an example of a new image on which a mark is superimposed;
Fig. 9 is a diagram showing a display example of a new image in a case where a mark change operation is received;
Fig. 10 is an example of an output image displayed on the editing screen by the mark change operation;
Fig. 11 is a diagram showing an example of a new image in which a display form of a mark is changed for each attribute of a feature portion;
Fig. 12 is a diagram showing an example of a new image in which only a mark representing a position of a wrinkle is displayed; and
Fig. 13 is a diagram showing an example of a new image in which a character string representing a position of a feature portion is displayed.

### DETAILED DESCRIPTION OF THE INVENTION

Hereinafter, an exemplary embodiment of the present disclosure will be described with reference to drawings. In addition, identical components and identical processing are denoted by identical reference numerals throughout the drawings, and redundant description will be omitted. In addition, dimensional ratios in the drawings are exaggerated for convenience of description and may differ from the actual ratios.

An information processing system according to the present disclosure will be described. A person may have a feature portion that impresses the person on another person. For example, a mole or the like located in a position visible to others may be easily remembered by others together with the atmosphere of the person. Such a feature portion of an appearance of the person may give a good impression to other persons, but there is also a feature portion that the person wants to hide.

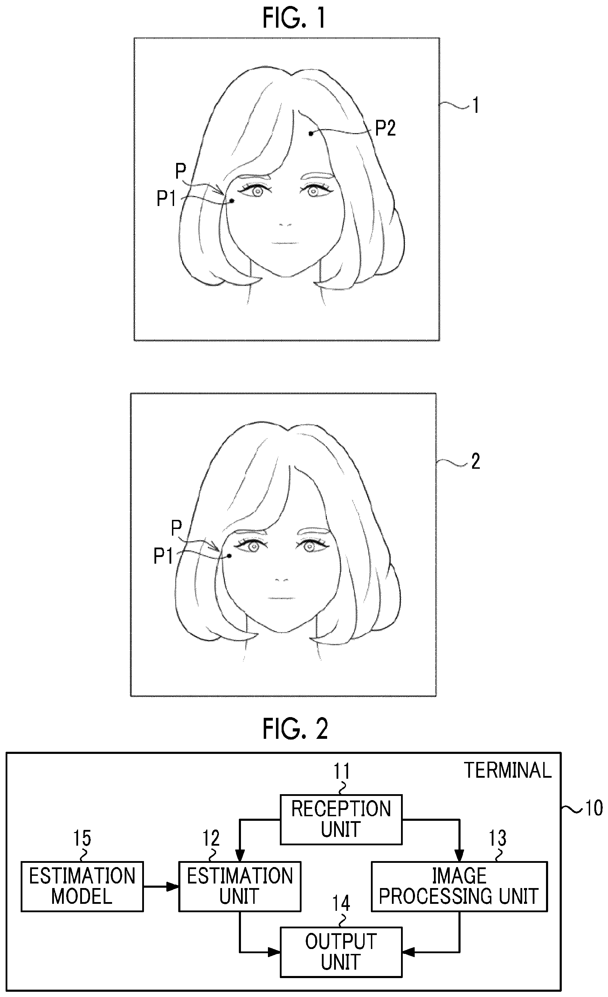

Fig. 1 is a diagram showing image examples of a person. The person included in an image 1 of Fig. 1 has two feature portions P1 and P2, which are moles. In general, a mole on the corner of the eye often gives a charming impression. On the contrary, a mole on the hairline of the forehead is less likely to give a specific impression to others, but may be a concern to the person.

Therefore, as in an image 2 in Fig. 1, a situation in which a mole represented by the feature portion P1 is left as it is and a mole on the forehead represented by the feature portion P2 is to be removed occurs.

In response to such a demand, the information processing system estimates, from the unprocessed image 1, a type of processing to be performed on the image 1, positional information of the feature portion P for which it is considered better to perform image processing, and positional information of the feature portion P for which it is considered better not to perform image processing.

Hereinafter, the positional information of the feature portion P for which it is considered better to perform image processing is referred to as "processed positional information". The positional information of the feature portion P for which it is considered better not to perform image processing is referred to as "unprocessed positional information".

The positional information of the feature portion P is represented by, for example, a specific part and a relative direction from the part, such as "lower right of the right eye" or "upper left of the forehead". However, a method of representing the positional information of the feature portion P is not limited thereto. Any expression may be used as long as the position of the feature portion P can be represented.

In addition, in a case where all feature portions are collectively referred to without distinguishing the individual feature portions, such as the feature portion P1 and the feature portion P2 in Fig. 1, the feature portion is referred to as a "feature portion P". The feature portion P according to the present disclosure does not necessarily have to be on a face of the person, and may be on the body surface of the person in a range visible from others.

The feature portion P is not limited to a mole, and may be a target that gives some impression to others. Therefore, for example, wrinkles, blemishes, pores, beard, acne, downy hair, hair, teeth, dark circles, eyes, nose, mouth, wounds, insect bites, and bulging blood vessels are examples of the feature portion P.

The "image" according to the present disclosure may be any of a still image or a video, and may be monochrome or color.

For convenience of description, the unprocessed image 1, in which no processing has been applied to the feature portion P, as shown in Fig. 1, is referred to as a "new image 1". In addition, the image 2 obtained by applying the processing to the feature portion P, as shown in Fig. 1, is referred to as an "output image 2". The output image 2 is an example of a processed new image 1 according to the present disclosure.

Fig. 2 is a diagram showing an example of a functional configuration of a terminal 10 constituting an information processing system. The terminal 10 includes functional units such as a reception unit 11, an estimation unit 12, an image processing unit 13, and an output unit 14, and an estimation model 15.

The reception unit 11 receives the new image 1 that is a target of image processing. Further, the reception unit 11 receives an instruction from a user to the terminal 10.

The estimation unit 12 estimates processing information from the new image 1 that is received by the reception unit 11. The processing information is information including a type of processing to be executed on the new image 1, processed positional information of the feature portion P on which the image processing is performed, and unprocessed positional information of the feature portion P on which the image processing is not performed. The estimation of processing information by the estimation unit 12 is performed using, for example, an estimation model 15.

The estimation model 15 is a model generated by machine learning. The machine learning is an operation in which a computer learns a causal relationship between data hidden in sample data through the given sample data and generates a model that represents the causal relationship between the data. Therefore, as the number of sample data that is given is larger, the causal relationship between data hidden in the sample data tends to be correctly learned. In the present exemplary embodiment, the sample data used for the machine learning is referred to as "training data 16".

In order for the estimation unit 12 to estimate the processing information using the estimation model 15, it is only necessary to use the estimation model 15 that outputs the processing information in a case where the new image 1 is input.

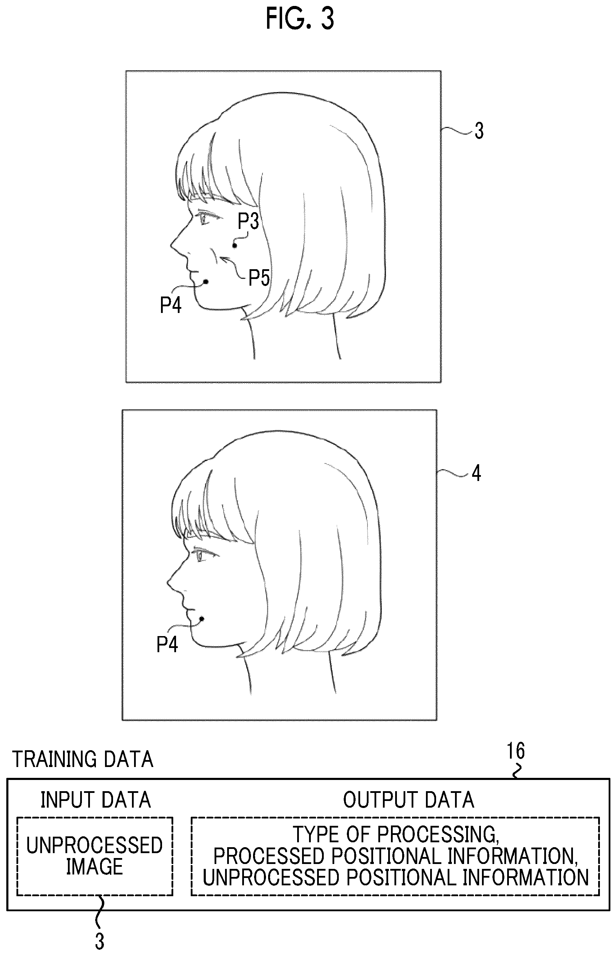

Fig. 3 is a diagram showing an example of generation of the training data 16 used for machine learning of the estimation model 15. It is assumed that a processed image 4 is obtained by the user performing processing of the feature portion P using existing image processing software with respect to an image 3 of a person including the feature portion P before processing, as shown in Fig. 3. Specifically, the image 4 is obtained by performing processing of removing a feature portion P3 representing a mole on a cheek and a feature portion P5 representing a wrinkle from the image 3. Since the user performs the processing by himself/herself, the user understands the processing information performed on the image 3 in order to obtain the image 4.

Therefore, the user can generate the training data 16 in which the processing information performed on the image 3 to obtain the image 4 is associated with the image 3.

The user generates the training data 16 in which the processing information is associated with the image 3 from various images 3. In the training data 16, the image 3 is input data, and the processing information is output data. The person included in the image 3 may not necessarily be the same person. In addition, the age and gender of the person included in the image 3 may not be necessarily the same.

In a case where the image 3 of the training data 16 is input, the user uses the training data 16 to generate a model, that is, the estimation model 15, through machine learning, such that the output approaches the content of the processing information included in the training data 16. That is, the estimation model 15 is a model that represents a causal relationship between the image 3 and the processing information based only on the relationship between the input and the output. A method of performing machine learning on the estimation model 15 that represents the relationship between the input data and the output data using the training data 16 in which the desired output data (in this case, the processing information) is associated with the input data as described above is referred to as "supervised machine learning".

Supervised machine learning includes well-known methods such as linear regression, logistic regression, random forest, boosting, support vector machine, deep learning, and autoregressive models. In the present disclosure, as an example, machine learning of the estimation model 15 is performed by using deep learning. Deep learning is an example of a neural network that is composed of a plurality layers of intermediate layers (also referred to as a "hidden layer"), and for example, a convolutional neural network (CNN) is used.

The unprocessed image 3 used for generating the training data 16 is referred to as an "unprocessed image 3", and the image 4 obtained by performing processing with respect to the unprocessed image 3 is referred to as a "processed image 4". The unprocessed image 3 is an example of a first image according to the present disclosure. The processed image 4 is an example of a second image according to the present disclosure. Both the new image 1 and the unprocessed image 3 are unprocessed images, but the new image 1 is an unprocessed image that is not used in the training data 16.

The estimation model 15 may be generated by the terminal 10, but it is preferable to generate the estimation model 15 by using, for example, a cloud computing service having processing performance superior to the terminal 10.

In the above description, an example in which the user performs data labeling to generate the training data 16 has been described, but the training data 16 may be generated by using a generative model 17 that generates the training data 16 from the unprocessed image 3 and the processed image 4.

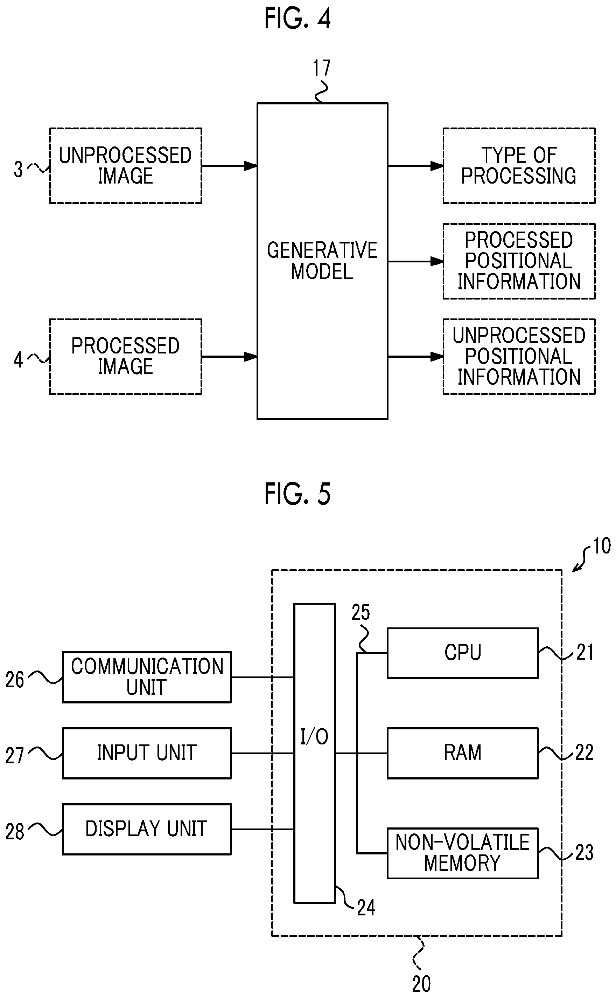

Fig. 4 is a diagram showing an example of generation of the training data 16 using the generative model 17. As shown in Fig. 4, in a case where the unprocessed image 3 and the processed image 4 are input, the generative model 17 outputs the processing information for the unprocessed image 3.

The generative model 17 is generated by machine learning by using training data in which the processing information is associated with the unprocessed image 3 and the processed image 4. The generative model 17 may also be generated by the terminal 10 in the same manner as the estimation model 15, but it is preferable to generate the estimation model 15 by using, for example, a cloud computing service having processing performance superior to the terminal 10.

The image processing unit 13 in Fig. 2 executes processing of the new image 1 in accordance with the processing information estimated by the estimation unit 12. In addition, the image processing unit 13 executes image processing in accordance with an instruction of the user received through the reception unit 11.

The output unit 14 outputs the processing information for the new image 1 that is estimated by the estimation unit 12. In this case, the output unit 14 may output the processing information together with the received new image 1. In addition, the output unit 14 may output the new image 1 on which the image processing is performed by the image processing unit 13, as the output image 2.

In the present disclosure, the terminal 10 including the image processing unit 13 is described, but the terminal 10 does not necessarily include the image processing unit 13. In this case, the output unit 14 outputs the processing information for the new image 1.

The "output" according to the present disclosure is to make the information processed by the terminal 10 in a state in which the user can confirm the information. Therefore, a form of transmitting the processing information, the new image 1, and the output image 2 to an external device (not shown) via a communication line, and a form of displaying the processing information, the new image 1, and the output image 2 on a display are output examples of the processing information, the new image 1, and the output image 2. In addition, a form in which the processing information, the new image 1, and the output image 2 are printed on paper or the like by a printer, and a form in which the processing information, the new image 1, and the output image 2 are stored in a storage device to which a user is given a permission to read are also output examples of the processing information, the new image 1, and the output image 2. A case where the output unit 14 displays the processing information, the new image 1, and the output image 2 on the display will be described in the present disclosure.

Such a terminal 10 is configured by using a computer 20, for example.

Fig. 5 is a diagram showing a configuration example of a main part of an electrical system of the terminal 10 configured by using the computer 20.

The computer 20 constituting the terminal 10 includes a central processing unit (CPU) 21 which is an example of a processor responsible for executing functions of the terminal 10. In addition, the computer 20 includes a random access memory (RAM) 22, which is used as a temporary work area of the CPU 21, a non-volatile memory 23, and an input/output interface (I/O) 24. The CPU 21, the RAM 22, the non-volatile memory 23, and the I/O 24 are connected to each other via a bus 25.

The non-volatile memory 23 is an example of a storage device that retains stored information even in a case where power supplied to the non-volatile memory 23 is cut off. For example, a semiconductor memory is used for the non-volatile memory 23, but a hard disk may also be used. Information that needs to be stored even in a case where the power of the terminal 10 is cut off, such as the estimation model 15, is stored in the non-volatile memory 23.

For example, a communication unit 26, an input unit 27, and a display unit 28 are connected to the I/O 24.

The communication unit 26 is connected to the communication line and has a communication protocol for transmitting and receiving data to and from the external device connected to the communication line.

The input unit 27 is a device that receives an instruction from the user and notifies the CPU 21 of the instruction. As the input unit 27, for example, a button, a touch panel, a mouse, a keyboard, a pointing device, and the like are used.

The display unit 28 is an example of a display device that displays information processed by the CPU 21 as an image. For example, a liquid crystal display, an organic electro luminescence (EL) display, or the like is used as the display unit 28.

The units connected to the I/O 24 are not limited to the communication unit 26, the input unit 27, and the display unit 28. Necessary units are selected as needed according to the functions of the terminal 10 and are connected to the I/O 24.

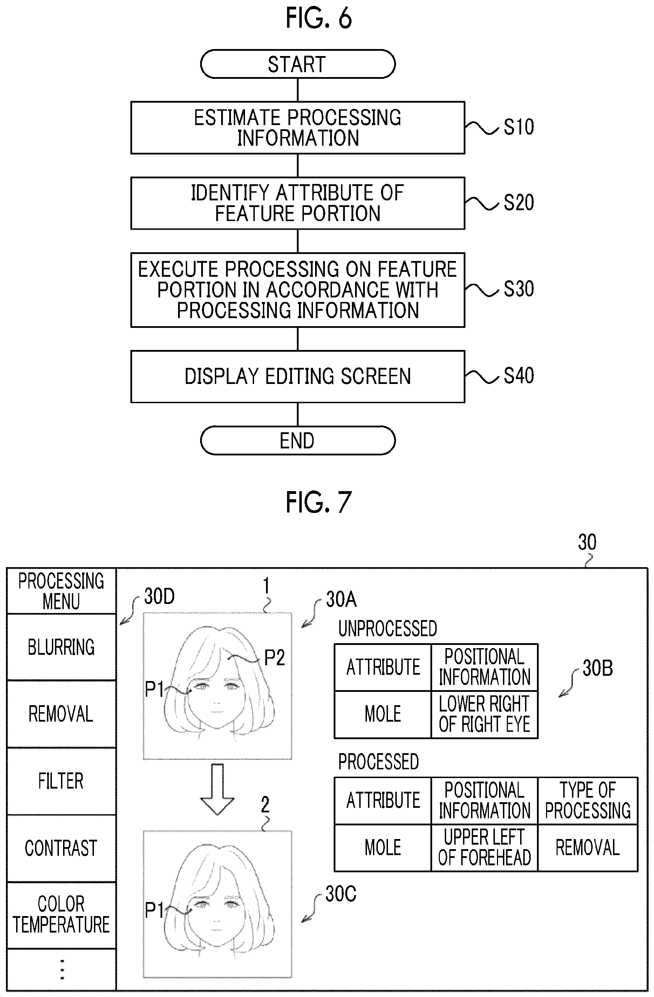

Next, estimation processing of the processing information performed by the terminal 10 will be described. Fig. 6 is a flowchart showing an example of a flow in estimation processing of the processing information executed by the CPU 21 of the terminal 10 in a case where the new image 1 is received.

An information processing program that defines the estimation processing of the processing information is stored in advance in, for example, the non-volatile memory 23 of the terminal 10. The CPU 21 of the terminal 10 reads the information processing program stored in the non-volatile memory 23 and executes the estimation processing of the processing information. In the following, an example in which the terminal 10 receives the new image 1 shown in Fig. 1 will be described. It is assumed that the non-volatile memory 23 stores, in advance, the estimation model 15 generated by the machine learning using the training data 16.

In Step S10 of Fig. 6, the CPU 21 estimates the processing information of the received new image 1 by using the estimation model 15 stored in the non-volatile memory 23. Specifically, the CPU 21 inputs the received new image 1 to the estimation model 15. Accordingly, the processing information for the new image 1 is output from the estimation model 15.

In Step S20, the CPU 21 identifies the type of the feature portion P at a position represented by the processed positional information and the unprocessed positional information included in the processing information by using a well-known image recognition method. For example, the CPU 21 identifies the type of the feature portion P, such as whether the feature portion P at the position represented by the processed positional information and the unprocessed positional information is a mole or a wrinkle. In the following, the type of the feature portion P is referred to as an "attribute" of the feature portion P. The mole and the wrinkle are examples of the attribute of the feature portion P.

In Step S30, the CPU 21 executes the processing indicated by the type of processing on the feature portion P at the position represented by the processed positional information in accordance with the processing information output by the estimation model 15.

For example, it is assumed that the position represented by the processed positional information is a position of the feature portion P2 in the new image 1 of Fig. 1, and the position represented by the unprocessed positional information is a position of the feature portion P1 in the new image 1 of Fig. 1. In a case where a content of the processing indicated by the type of processing is removal, the CPU 21 removes only the feature portion P2 without removing the feature portion P1. Since both the feature portion P1 and the feature portion P2 are moles, as a result, an output image 2 in which only the mole on the corner of the eye is not removed and the mole on the forehead is removed is generated.

In Step S40, the CPU 21 displays an editing screen 30 on which the received new image 1, the processing information estimated in Step S10, the attribute of the feature portion P identified in Step S20, and the output image 2 generated in Step S30 are displayed, on the display unit 28.

Fig. 7 is a diagram showing an example of the editing screen 30. The layout of the editing screen 30 is an example, and the new image 1, the processing information, the attribute of the feature portion P, and the output image 2 may be arranged on the editing screen 30 in any manner. In the example of the editing screen 30 of Fig. 7, the new image 1 is displayed in a region 30A, and the attribute and the processing information of the feature portion P are displayed in a region 30B in a form of being divided into the feature portion P to be processed and the feature portion P not to be processed. In Fig. 7, the attribute of the feature portion P is simply displayed as "attribute". In addition, in a region 30C of the editing screen 30, an output image 2 obtained by processing the new image 1 in accordance with the processing information is displayed.

A processing menu for further processing the output image 2 is displayed in a region 30D of the editing screen 30. The CPU 21 executes processing corresponding to the processing item selected by the user from the processing menu, on the output image 2. For example, in a case where "blurring" is selected from the processing menu, the CPU 21 executes processing to blur a range of the output image 2 designated by the user.

As described above, the CPU 21 ends the estimation processing of the processing information as shown in Fig. 6. As described above, the terminal 10 distinguishes and estimates the feature portion P that is better to be processed and the feature portion P that does not need to be processed for the person included in the new image 1. Therefore, the CPU 21 can leave the feature portion P that gives a favorable impression to a person or that makes an impression to a person, instead of uniformly removing the feature portions P extracted from the person.

In the estimation model 15 used for the estimation of the processing information in Step S10 of Fig. 6, for example, a so-called standard estimation model 15A, which has been subjected to machine learning using training data 16 generated based on pair data of unprocessed images 3 and processed images 4 of various persons, is used. On the other hand, the estimation model 15, that is, an individual estimation model 15B, which has been subjected to machine learning using training data 16 generated based on pair data of the unprocessed image 3 and the processed image 4 of the same person, may be generated in advance for each person.

The standard estimation model 15A represents a greatest common denominator causal relationship between the feature portions P of various persons and the processing information. On the other hand, the individual estimation model 15B represents a causal relationship between the feature portion P and the processing information, which are present only for the individual person included in the unprocessed image 3 and the processed image 4.

That is, the individual estimation model 15B more accurately represents the causal relationship between the feature portion P and the processing information than the standard estimation model 15A for the person included in the unprocessed image 3 and the processed image 4 used to generate the training data 16.

Therefore, in a case where the person included in the new image 1 can be specified, the CPU 21 may estimate the processing information by using the individual estimation model 15B for the person included in the new image 1, instead of the standard estimation model 15A. For example, identification information representing a person included in the new image 1 is associated with the new image 1. In addition, the identification information representing the person included in the unprocessed image 3 of the training data 16 used for the machine learning is associated with the individual estimation model 15B. In this case, the CPU 21 may only need to use the individual estimation model 15B associated with the same identification information as the identification information associated with the new image 1 from among a plurality of individual estimation models 15B prepared in advance for each person, for estimating the processing information.

In a case where the identification information is not associated with the new image 1, the user may input, through the input unit 27, the identification information of the person included in the new image.

In addition, in a case where the new image 1 includes a plurality of persons, the CPU 21 may estimate the processing information for each person included in the new image 1, by using the individual estimation model 15B associated with each person.

However, the individual estimation model 15B is not necessarily generated in advance for all the persons included in the new image 1. Therefore, in a case where a person of whom the individual estimation model 15B is not generated is included in the new image 1, the CPU 21 may use the standard estimation model 15A to estimate the processing information for the person.

### <Display and Operation Example on Editing Screen>

The user can perform various operations on the new image 1 and the output image 2 on the editing screen 30. In the following, an editing function provided to the user by the terminal 10 through the editing screen 30 and display forms of the new image 1 and the output image 2 on the editing screen 30 will be described.

The new image 1 is displayed in the region 30A of the editing screen 30 shown in Fig. 7, but the CPU 21 may superimpose and display a mark M at the position of each feature portion P represented by the processed positional information and the unprocessed positional information.

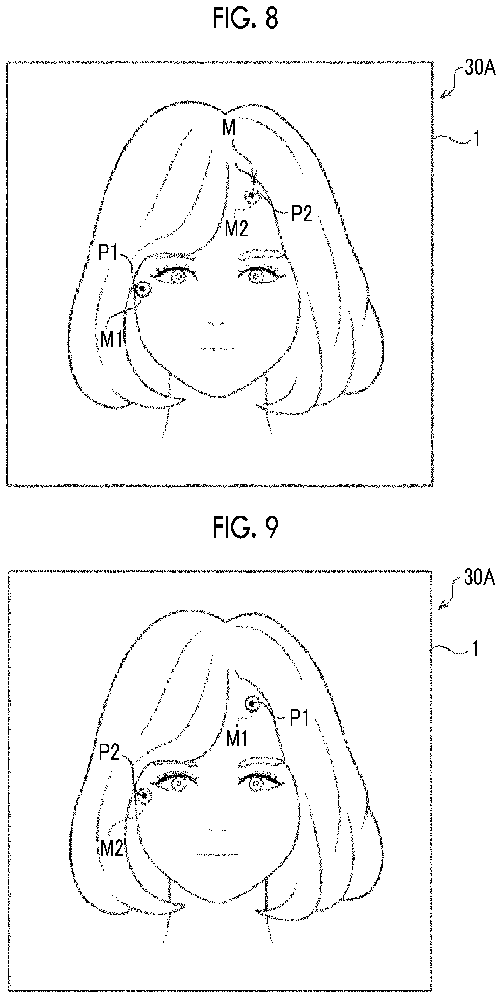

Fig. 8 is a diagram showing an example of the new image 1 on which the mark M is superimposed. In the example shown in Fig. 8, a circle surrounding the feature portion P is used as the mark M, but there are no limitations on the shape, line type, color, and the like of the mark as long as the user can be notified of the position of the feature portion P. For example, a triangle or an arrow pointing the feature portion P may be used as the mark M.

Further, the CPU 21 may display the mark M representing the position of the feature portion P represented by the unprocessed positional information and the mark M representing the position of the feature portion P represented by the processed positional information in different display forms.

For convenience of description, in order to distinguish the mark M representing the position of the feature portion P represented by the unprocessed positional information and the mark M representing the position of the feature portion P represented by the processed positional information, the former is referred to as a "mark M1" and the latter is referred to as a "mark M2". The mark M1 is an example of a first mark according to the present disclosure, and the mark M2 is an example of a second mark according to the present disclosure. In a case where the mark M1 and the mark M2 are collectively referred to, the mark M1 and the mark M2 are referred to as a "mark M". In addition, the feature portion P represented by the unprocessed positional information is described as a feature portion P1, and the feature portion P represented by the processed positional information is described as a feature portion P2.

In the example shown in Fig. 8, a circle indicated by a solid line is used for the mark M1, which represents the position of the feature portion P1. In addition, a circle indicated by a dotted line is used for the mark M2, which represents the position of the feature portion P2.

Here, an example in which the mark M representing the position of the feature portion P is displayed for the new image 1 displayed in the region 30A of the editing screen 30 is described. The CPU 21 may display the mark M representing the position of the feature portion P on the output image 2 displayed in the region 30C of the editing screen 30. That is, the CPU 21 may display the mark M on at least one of the new image 1 or the output image 2 displayed on the editing screen 30.

In the output image 2, the feature portion P2 may be removed, but even in such a case, it is preferable to display, for example, the mark M2 in order to indicate the position where the removed feature portion P2 is located to the user.

The CPU 21 displays the mark M1 and the mark M2 in the new image 1 shown in Fig. 8 in accordance with the processed positional information and the unprocessed positional information included in the processing information estimated in Step S10 of Fig. 6. However, the discrimination between the feature portion P1 and the feature portion P2 estimated by the estimation model 15 may be different from the human sense. For example, the feature portion P that gives a good impression to others may be discriminated as the feature portion P2, and conversely, the feature portion P that gives a bad impression to others may be discriminated as the feature portion P1.

Therefore, the CPU 21 receives an operation to change the mark M1 and the mark M2 displayed on the new image 1 from the user. For the change operation of changing the mark M1 and the mark M2, for example, a predetermined operation is used, such as moving a mouse cursor to the mark M to be changed by the user and clicking the mouse.

The operation of the user on the editing screen 30 including the change operation or the like is not limited to the operations using the mouse. For example, operations using a touch panel or a pen tablet instead of a mouse may be used. In a case where the touch panel is used, for example, the user performs the change operation by pressing and holding with a finger at a position of the mark M to be changed. In addition, in a case where the pen tablet is used, for example, the user performs the change operation by tapping the position of the mark M to be changed twice with a pen tip.

In a case where a click operation on the mark M1 is received, the CPU 21 changes the clicked mark M1 to the mark M2. In this case, the CPU 21 changes the positional information of the feature portion P (specifically, the feature portion P1) associated with the mark M changed from the mark M1 to the mark M2 to be treated as the processed positional information instead of the unprocessed positional information.

In addition, in a case where a click operation on the mark M2 is received, the CPU 21 changes the clicked mark M2 to the mark M1. In this case, the CPU 21 changes the positional information of the feature portion P (specifically, the feature portion P2) associated with the mark M changed from the mark M2 to the mark M1 to be treated as the unprocessed positional information instead of the processed positional information.

Fig. 9 is a diagram showing a display example of the new image 1 in a case where a change operation of the mark M is received. The new image 1 shown in Fig. 9 shows the display of the new image 1 shown in Fig. 8 after the user clicks the mark M1 and the mark M2 with the mouse, respectively. Therefore, the feature portion P1 represented by the mark M1 in Fig. 8 is displayed as a feature portion P2 represented by the mark M2 in Fig. 9. On the other hand, the feature portion P2 represented by the mark M2 in Fig. 8 is displayed as a feature portion P1 represented by the mark M1 in Fig. 9.

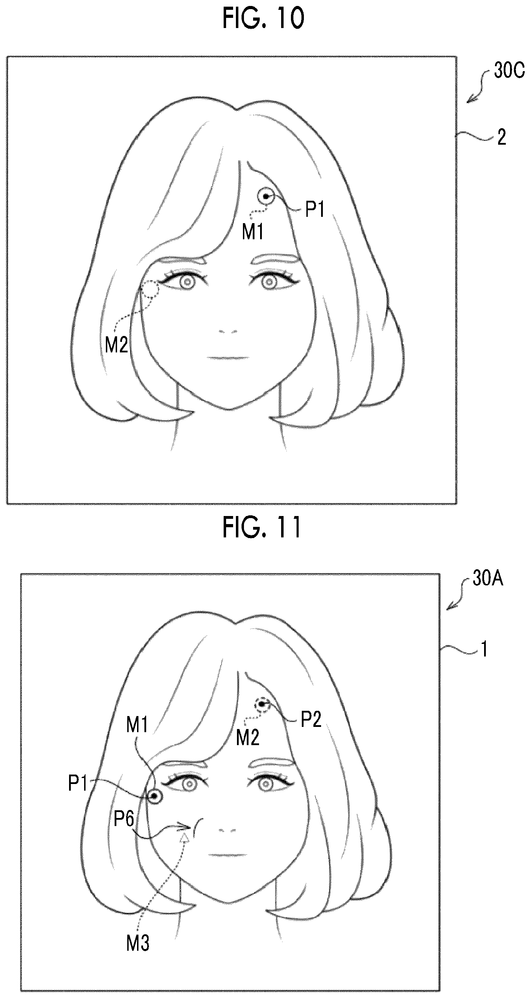

The CPU 21 also changes the processing on the output image 2 in accordance with the change operation of the mark M. Fig. 10 is an example of the output image 2 displayed in the region 30C of the editing screen 30 as a result of the change operation of the mark M shown in Fig. 9. In a case where the change operation of the mark M is performed as shown in Fig. 9, the CPU 21 leaves the mole on the forehead, which is the new feature portion P1, as it is. On the other hand, the CPU 21 removes the mole on the corner of the eye, which is the new feature portion P2. The CPU 21 also changes the attribute and the processing information of the feature portion P displayed in the region 30B in a form of being divided into the feature portion P to be processed and the feature portion P not to be processed in accordance with the change operation of the mark M.

In this way, in a case where the user performs the change operation of the mark M, there is a high probability that the user also performs the same change operation on another new image 1 including the same person as the person included in the new image 1 on which the change operation of the mark M is performed. However, performing the change operation of the mark M each time the user edits the new image 1 that includes the same person decreases the operability.

Therefore, the CPU 21 stores the content of the change operation of the mark M performed by the user in association with the identification information that is associated with the new image 1 in which the change operation of the mark M is performed, in the non-volatile memory 23. In a case where the CPU 21 receives a new new image 1, the CPU 21 searches for whether or not the content of the change operation of the mark M is associated with the identification information associated with the new new image 1. In a case where the content of the change operation of the mark M is associated with the identification information, the CPU 21 edits the processing information so that the processing information estimated in Step S10 of Fig. 6 is the same result as the editing result of the change operation of the mark M associated with the identification information.

That is, in a case where another new image 1 including the same person as the person included in the new image 1 in which the change operation of the mark M has been performed in the past is received, the CPU 21 carries over the setting status of the mark M in the new image 1 in which the change operation of the mark M has been performed to the new image 1.

For example, it is assumed that a change operation of the mark M as shown in Fig. 9 is performed on the new image 1 shown in Fig. 8. In this case, the CPU 21 performs processing of leaving the mole on the forehead as it is and removing the mole at the corner of the eye regardless of the estimation result of the estimation model 15 for another new image 1 including the same person as the person included in the new image 1 shown in Fig. 8.

On the other hand, as already described, in the editing screen 30, the user can perform the processing on the output image 2 through the processing menu. The CPU 21 stores the content of the processing performed by the user on the person included in the new image 1 as a common processing rule for the person. In such a situation, it is assumed that the terminal 10 receives another new image 1 that includes the same person as the person included in the new image 1 on which the user has performed the processing. In this case, the CPU 21 autonomously performs additional processing in accordance with the common processing rule on the new image 1 processed based on the processing information estimated by using the estimation model 15. Therefore, each output image 2 including the same person is an image with a sense of unity in accordance with a common processing rule. A method of giving a sense of unity and consistency to the design and style of an image is called "tone and manner". As described above, the CPU 21 can also introduce the tone and manner to the new image 1 that includes the same person.

For example, for the new image 1 including a person A, even in a case where the user does not perform the additional processing from the processing menu, in a case where the tone of the new image 1 including the person A in the past is converted into sepia color, the CPU 21 also converts the tone of other new images 1 including the person A into sepia color. Of course, the user can also instruct the CPU 21 not to apply the common processing rule for setting the tone and manner.

Since the processing content for the new image 1 differs for each person, a common processing rule used for tone and manner settings exists for each person. On the other hand, there is also a processing content that is common to all the new images 1 regardless of the person included in the new image 1.

For example, in a case where a registered trademark such as a company name, a product name, or a logo, or a character string or a figure that causes an unpleasant emotion to a person is displayed on clothes worn by a person or on a background of a person, processing of covering the character string or the figure with a background color or a color of clothes is performed. In addition, in a case where the copyrighted work is included in the new image 1, processing of replacing the copyrighted work with other items that are publicly available or blurring the copyrighted work is performed. In addition, in a case where the new image 1 includes a building or a famous place that is a landmark leading to the identification of the person's location, processing such as covering, blurring, and replacing is performed.

A processing rule that defines the processing content that is common to all the new images 1 is stored in, for example, the non-volatile memory 23 as a standard processing rule. The CPU 21 autonomously performs, for example, additional processing on the output image 2 in accordance with the standard processing rule. Of course, the user can also instruct the CPU 21 not to perform the additional processing in accordance with the standard processing rule.

In the above, for example, as shown in Fig. 8, a display form of the mark M is changed depending on whether the mark M represents the feature portion P represented by the unprocessed positional information or the feature portion P represented by the processed positional information. In addition, the CPU 21 may change the display form of the mark M depending on the attribute of the feature portion P.

Fig. 11 is a diagram showing an example of the new image 1 in which a display form of the mark M is changed for each attribute of the feature portion P. In the example shown in Fig. 11, the positions of the feature portions P1 and P2 that represent the moles are displayed by the marks M1 and M2 using circles. On the other hand, a feature portion P6 representing the wrinkle is displayed by a mark M3 using a triangle.

The CPU 21 may perform a display in which the display form of the mark M is changed for each attribute of the feature portion P on the output image 2 displayed in the region 30C of the editing screen 30. That is, the CPU 21 may display a display form of the mark M superimposed on at least one of the new image 1 or the output image 2 displayed on the editing screen 30 by changing the display form for each attribute of the feature portion P.

In addition, in a case where the feature portion P having different attributes is present in the new image 1, the CPU 21 may determine an attribute to be preferentially displayed from among a plurality of attributes. For example, the older person often has the feature portion P corresponding to many types of attributes such as spots, wrinkles, and warts, compared to the younger person. In a case where the marks M representing all the feature portions P are displayed on the new image 1 at once in this state, the marks M may overlap each other, and it is difficult to distinguish the feature portions P.

Therefore, the CPU 21 may display only the mark M corresponding to the attribute having the largest number among the plurality of attributes, on the new image 1.

For example, as shown in Fig. 11, it is assumed that the feature portions P1 and P2 are moles and the feature portion P6 is a wrinkle in the new image 1, which are identified in Step S20 of Fig. 6. Since the number of identified moles is two and the number of wrinkles is one, the CPU 21 displays only the marks M1 and M2 representing the positions of the moles, which are larger than the number of wrinkles, on the new image 1 (see Fig. 8).

In this case, the mark M3 representing the position of the wrinkle is not displayed on the new image 1. Therefore, in a case where the CPU 21 receives a display instruction to display the mark M of the other attribute that is not displayed in the new image 1 from the user, the CPU 21 displays the mark M representing the position of the attribute having the next largest number after the attribute being displayed in the new image 1.

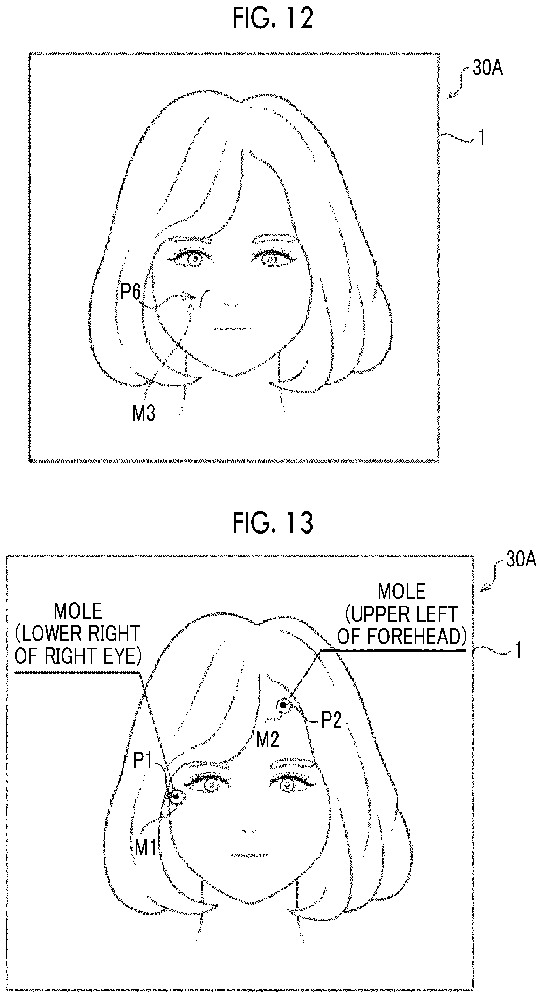

The above-described operation will be described using a new image 1 having the feature portions P1 and P2 due to the moles and the feature portion P6 due to the wrinkle as shown in Fig. 11 as an example. As already described, the CPU 21 displays only the marks M1 and M2 representing the positions of the moles, which are larger than the number of the wrinkles, on the new image 1 (see Fig. 8). After that, it is assumed that the user presses, for example, an other attribute display button (not shown) that is displayed on the editing screen 30. The pressing of the other attribute display button is an example of a display instruction to display the mark M for other attributes not displayed on the new image 1. In a case where the other attribute display button is pressed, the CPU 21 displays only the mark M3 representing the position of the wrinkle with the next largest number after the marks M1 and M2 representing the positions of the moles, on the new image 1. Fig. 12 is a diagram showing an example of the new image 1 in which only the mark M3 representing the position of the wrinkle is displayed for the new image 1 shown in Fig. 11.

As described above, each time the user issues a display instruction for another attribute, the CPU 21 displays on the new image 1 in order starting from the mark M representing the position of the attribute corresponding to the attribute having the largest number among the plurality of attributes of the feature portion P identified from the new image 1. The display instruction for the other attribute is an example of an output instruction according to the present disclosure.

The CPU 21 may perform a display form of the attribute of the feature portion P on the output image 2 displayed in the region 30C of the editing screen 30. That is, the CPU 21 controls the order of the marks M according to the attribute to be displayed on at least one of the new image 1 or the output image 2 displayed on the editing screen 30, according to the number of each attribute of the feature portions P included in the new image 1.

Further, the CPU 21 may display a character string representing the position of the feature portion P of the person included in the new image 1 associated with the mark M, on the new image 1 in a superimposed manner, together with the display of the mark M.

Fig. 13 is a diagram showing an example of a new image 1 in which a character string representing a position of the feature portion P is displayed. In the example shown in Fig. 13, an attribute of the feature portion P and a position of the feature portion P are represented by a character string. For example, for the feature portion P1, the attribute of the feature portion P1 is a mole, and the feature portion P1 is located on the lower right of the right eye. In addition, for the feature portion P2, the attribute of the feature portion P2 is a mole, and the feature portion P2 is located on the upper left part of the forehead. The CPU 21 specifies the position of the feature portion P by analyzing a positional relationship between the region representing the person included in the new image 1 and the feature portion P represented by the processed positional information and the unprocessed positional information.

<Modification Example of Estimation Model>

The estimation model 15 described above outputs a type of processing to be executed on the new image 1, processed positional information of the feature portion P on which the processing is performed, and unprocessed positional information of the feature portion P on which the processing is not performed. Among these, some types of processing to be executed have degrees of processing, such as strong or weak. For example, in the blurring processing, the feature portion P may be blurred such that the feature portion P cannot be completely recognized, or blurred only to the extent that the feature portion P can be recognized.

Therefore, the CPU 21 may estimate the processing information of the new image 1 by using a deformation estimation model 15C that outputs the type of processing to be executed, the degree of processing to be executed, the processed positional information of the feature portion P on which the processing is performed, and the unprocessed positional information of the feature portion P on which the processing is not performed. The processing information in this case includes the type of processing to be executed on the new image 1, a degree of processing to be executed on the new image 1, processed positional information of the feature portion P on which the image processing is performed, and unprocessed positional information of the feature portion P on which the image processing is not performed.

The deformation estimation model 15C is generated by machine learning using the training data 16 in which processing information including the degree of processing is associated with the unprocessed image 3.

The CPU 21 executes the type of processing indicated by the processing information on the feature portion P of the new image 1 represented by the processed positional information, at the degree of processing indicated by the processing information, based on the processing information estimated by the deformation estimation model 15C.

Although one aspect of the information processing system has been described above using the exemplary embodiment, the disclosed form of the information processing system is an example. The form of the information processing system is not limited to the range described in the exemplary embodiment. Various modifications or improvements can be made to the exemplary embodiment without departing from the gist of the present disclosure. Such modified or improved forms are also included within the technical scope of the present disclosure. For example, the internal processing order in the estimation processing of the processing information shown in Fig. 6 may be changed without departing from the gist of the present disclosure.

In addition, in the exemplary embodiment described above, a form in which the estimation processing of the processing information is realized by software has been described as an example. However, the identical processing shown in the flowchart may be processed by hardware. In this case, a processing speed is increased as compared with a case where the estimation processing of the processing information is realized by software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the program of the present application may be provided as a program product.

Further, the terminal 10 may download the information processing program from an external device through the communication unit 26 and store the downloaded information processing program in the non-volatile memory 23.

In the following, supplementary notes according to the present exemplary embodiment are shown.

### (Supplementary Note)

(((1))) An information processing system comprising:
   a processor configured to:
   use an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and
   output the type of processing, the processed positional information, and the unprocessed positional information for the new image.
(((2))) The information processing system according to (((1))), wherein the processor is configured to:
   output the type of processing, the processed positional information, and the unprocessed positional information for the new image together with the new image before the processing.
(((3))) The information processing system according to (((2))), wherein the processor is configured to:
   not execute image processing represented by the estimated type of processing with respect to a position representing the feature portion of the person in the new image represented by the estimated unprocessed positional information, and execute image processing represented by the estimated type of processing with respect to a position representing the feature portion of the person in the new image represented by the estimated processed positional information; and
   further output the processed new image.
(((4))) The information processing system according to any one of (((1))) to (((3))),
   wherein the estimation model is a model that is prepared for each person and that is trained through machine learning using only the plurality of training data including first images including the same person, and identification information for identifying the person included in the first image constituting the training data used for the machine learning is associated with each estimation model, and
   the processor is configured to:
      estimate the type of processing, the processed positional information, and the unprocessed positional information from the new image using the estimation model associated with the identification information of the person included in the new image.
(((5))) The information processing system according to (((4))), wherein the processor is configured to:
   superimpose and output a mark representing a position of the feature portion of the person in the new image represented by the estimated processed positional information and a position of the feature portion of the person in the new image represented by the estimated unprocessed positional information on at least one of the new image before the processing or the new image after the processing.
(((6))) The information processing system according to (((5))), wherein the processor is configured to:
   output a first mark that is the mark representing the position of the feature portion of the person in the new image represented by the estimated unprocessed positional information and a second mark that is the mark representing the position of the feature portion of the person in the new image represented by the estimated processed positional information, in different display forms.
(((7))) The information processing system according to (((6))), wherein the processor is configured to:
   in a case where a predetermined operation for the first mark is received from a user, change the first mark in which the predetermined operation is performed to the second mark and change the unprocessed positional information associated with the mark changed from the first mark to the second mark to the processed positional information; and
   in a case where the predetermined operation for the second mark is received from the user, change the second mark in which the predetermined operation is performed to the first mark and change the processed positional information associated with the mark changed from the second mark to the first mark to the unprocessed positional information.
(((8))) The information processing system according to (((7))), wherein the processor is configured to:
   in a case where another new image including the same person as the person included in the new image in which the predetermined operation is performed is received, carry over a setting status of the first mark and the second mark in the new image in which the predetermined operation is performed to the other new image.
(((9))) The information processing system according to any one of (((5))) to (((8))), wherein the processor is configured to:
   output the new image on which a character string representing the position of the feature portion of the person in the new image associated with the mark is superimposed together with the mark.
(((10))) The information processing system according to any one of (((5))) to (((9))), wherein the processor is configured to:
   identify an attribute of the feature portion of the person in the new image from the new image; and
   superimpose and output the mark whose display form is changed for each attribute on at least one of the new image before the processing or the new image after the processing.
(((11))) The information processing system according to (((10))), wherein the processor is configured to:
   superimpose and output the mark corresponding to the attribute having a largest number among attributes identified from the new image on at least one of the new image before the processing or the new image after the processing.
(((12))) The information processing system according to (((11))), wherein the processor is configured to:
   in a case where an output instruction to output the mark corresponding to another attribute different from the mark being output is received from a user, further superimpose and output the mark corresponding to the attribute having a next largest number after the attribute represented by the mark being output among the attributes identified from the new image, on at least one of the new image before the processing or the new image after the processing.
(((13))) The information processing system according to any one of (((4))) to (((12))), wherein the processor is configured to:
   in a case where the new image includes a plurality of persons, estimate the type of processing, the processed positional information, and the unprocessed positional information for each person from the new image using the estimation model in which the identification information of each person is associated with each person included in the new image.
(((14))) The information processing system according to (((13))), wherein, in a case where the estimation model associated with the identification information of the person does not exist, the processor is configured to:
   estimate the type of processing, the processed positional information, and the unprocessed positional information for a person included in the new image with which the identification information is not associated, using a standard estimation model, which is the estimation model that is trained through machine learning using the plurality of training data including the first images that include different persons, with respect to the person to whom the estimation model is not associated.
(((15))) The information processing system according to any one of (((1))) to (((14))), wherein the processor is configured to:
   perform additional processing on each of new images processed by using the estimation model in accordance with a predetermined common processing rule for each person included in the new image.
(((16))) The information processing system according to any one of (((1))) to (((15))),
   wherein the estimation model is a model that is trained through machine learning using the training data in which a degree of processing performed on the first image to obtain the second image is further associated with the first image, and
   the processor is configured to:
      estimate the type of processing, the degree of processing, the processed positional information, and the unprocessed positional information from the new image by using the estimation model; and
      output the type of processing, the degree of processing, the processed positional information, and the unprocessed positional information for the new image.
(((17))) An information processing program causing a computer to execute a process comprising:
   using an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and
   outputting the type of processing, the processed positional information, and the unprocessed positional information for the new image.

The information processing system according to (((1))) and the information processing program according to (((17))) have an effect that it is possible to distinguish and estimate a feature portion that is better to be processed and a feature portion that does not need to be processed for a person included in an image.

The information processing system according to (((2))) has an effect that it is possible to confirm the estimated type of processing, the processed positional information, and the unprocessed positional information while referring to the new image.

The information processing system according to (((3))) has an effect that it is possible to confirm a new image in which image processing represented by the type of processing is executed with respect to the position represented by the processed positional information.

The information processing system according to (((4))) has an effect of improving estimation accuracy of the type of processing, the processed positional information, and the unprocessed positional information for the new image, as compared with a case of using the estimation model generated from the training data including the first image including the plurality of persons.

The information processing system according to (((5))) has an effect that it is possible to grasp the position of the feature portion estimated by the information processing system from the image.

The information processing system according to (((6))) has an effect that it is possible to grasp each feature portion from the image by distinguishing the feature portion to be processed and the feature portion not to be processed.

The information processing system according to (((7))) has an effect that, in a case where the estimation result regarding whether or not to process any feature portion is different from the intention of the user, the user can set the feature portion to be processed or the feature portion not to be processed in accordance with the intention of the user.

The information processing system according to (((8))) has an effect that it is possible to set the feature portion to be processed or the feature portion not to be processed in accordance with the intention of the user, without setting the feature portion to be processed or the feature portion not to be processed by the user each time.

The information processing system according to (((9))) has an effect that the position of the feature portion can be more accurately grasped than a case where the position of the feature portion is indicated only by the mark.

The information processing system according to (((10))) has an effect that it is possible to grasp a position of the feature portion of a person and an attribute of the feature portion.

The information processing system according to (((11))) has an effect that it is possible to output only the main attribute among the different attributes.

The information processing system according to (((12))) has an effect that it is possible to output the feature portion for each attribute.

The information processing system according to (((13))) has an effect of improving the estimation accuracy as compared with a case where the type of processing, the processed positional information, and the unprocessed positional information are estimated for each person using the same estimation model.

The information processing system according to (((14))) has an effect that even in a case where the estimation model associated with the person does not exist, it is possible to estimate the type of processing, the processed positional information, and the unprocessed positional information for the person to which the estimation model is not associated.

The information processing system according to (((15))) has an effect that it is possible to unify the atmosphere of each new image in which the same person is included after processing.

The information processing system according to (((16))) has an effect that it is possible to further estimate a degree of processing in addition to the type of processing, the processed positional information, and the unprocessed positional information for the new image.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: new image
2: output image
3: unprocessed image
4: processed image
10: terminal
11: reception unit
12: estimation unit
13: image processing unit
14: output unit
15: estimation model
15A: standard estimation model
15B: individual estimation model
15C: deformation estimation model
16: training data
17: generative model
20: computer
21: CPU
22: RAM
23: non-volatile memory
24: I/O
25: bus
26: communication unit
27: input unit
28: display unit
30: editing screen
30A to 30D: region on editing screen
M: mark
P: feature portion

## Claims

1. An information processing system comprising:
a processor configured to:
use an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and
output the type of processing, the processed positional information, and the unprocessed positional information for the new image.

2. The information processing system according to claim 1, wherein the processor is configured to:
output the type of processing, the processed positional information, and the unprocessed positional information for the new image together with the new image before the processing.

3. The information processing system according to claim 2, wherein the processor is configured to:
not execute image processing represented by the estimated type of processing with respect to a position representing the feature portion of the person in the new image represented by the estimated unprocessed positional information, and execute image processing represented by the estimated type of processing with respect to a position representing the feature portion of the person in the new image represented by the estimated processed positional information; and
further output the processed new image.

4. The information processing system according to any one of claims 1 to 3,
wherein the estimation model is a model that is prepared for each person and that is trained through machine learning using only the plurality of training data including first images including the same person, and identification information for identifying the person included in the first image constituting the training data used for the machine learning is associated with each estimation model, and
the processor is configured to:
estimate the type of processing, the processed positional information, and the unprocessed positional information from the new image using the estimation model associated with the identification information of the person included in the new image.

5. The information processing system according to claim 4, wherein the processor is configured to:
superimpose and output a mark representing a position of the feature portion of the person in the new image represented by the estimated processed positional information and a position of the feature portion of the person in the new image represented by the estimated unprocessed positional information on at least one of the new image before the processing or the new image after the processing.

6. The information processing system according to claim 5, wherein the processor is configured to:
output a first mark that is the mark representing the position of the feature portion of the person in the new image represented by the estimated unprocessed positional information and a second mark that is the mark representing the position of the feature portion of the person in the new image represented by the estimated processed positional information, in different display forms.

7. The information processing system according to claim 6, wherein the processor is configured to:
in a case where a predetermined operation for the first mark is received from a user, change the first mark in which the predetermined operation is performed to the second mark and change the unprocessed positional information associated with the mark changed from the first mark to the second mark to the processed positional information; and
in a case where the predetermined operation for the second mark is received from the user, change the second mark in which the predetermined operation is performed to the first mark and change the processed positional information associated with the mark changed from the second mark to the first mark to the unprocessed positional information.

8. The information processing system according to claim 7, wherein the processor is configured to:
in a case where another new image including the same person as the person included in the new image in which the predetermined operation is performed is received, carry over a setting status of the first mark and the second mark in the new image in which the predetermined operation is performed to the other new image.

9. The information processing system according to any one of claims 5 to 8, wherein the processor is configured to:
output the new image on which a character string representing the position of the feature portion of the person in the new image associated with the mark is superimposed together with the mark.

10. The information processing system according to any one of claims 5 to 9, wherein the processor is configured to:
identify an attribute of the feature portion of the person in the new image from the new image; and
superimpose and output the mark whose display form is changed for each attribute on at least one of the new image before the processing or the new image after the processing.

11. The information processing system according to claim 10, wherein the processor is configured to:
superimpose and output the mark corresponding to the attribute having a largest number among attributes identified from the new image on at least one of the new image before the processing or the new image after the processing.

12. The information processing system according to claim 11, wherein the processor is configured to:
in a case where an output instruction to output the mark corresponding to another attribute different from the mark being output is received from a user, further superimpose and output the mark corresponding to the attribute having a next largest number after the attribute represented by the mark being output among the attributes identified from the new image, on at least one of the new image before the processing or the new image after the processing.

13. The information processing system according to any one of claims 4 to 12, wherein the processor is configured to:
in a case where the new image includes a plurality of persons, estimate the type of processing, the processed positional information, and the unprocessed positional information for each person from the new image using the estimation model in which the identification information of each person is associated with each person included in the new image.

14. The information processing system according to claim 13, wherein, in a case where the estimation model associated with the identification information of the person does not exist, the processor is configured to:
estimate the type of processing, the processed positional information, and the unprocessed positional information for a person included in the new image with which the identification information is not associated, using a standard estimation model, which is the estimation model that is trained through machine learning using the plurality of training data including the first images that include different persons, with respect to the person to whom the estimation model is not associated.

15. The information processing system according to any one of claims 1 to 14, wherein the processor is configured to:
perform additional processing on each of new images processed by using the estimation model in accordance with a predetermined common processing rule for each person included in the new image.

16. The information processing system according to any one of claims 1 to 15,
wherein the estimation model is a model that is trained through machine learning using the training data in which a degree of processing performed on the first image to obtain the second image is further associated with the first image, and
the processor is configured to:
estimate the type of processing, the degree of processing, the processed positional information, and the unprocessed positional information from the new image by using the estimation model; and
output the type of processing, the degree of processing, the processed positional information, and the unprocessed positional information for the new image.

17. An information processing program causing a computer to execute a process comprising:
using an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is processed, and unprocessed positional information representing a position of a feature portion in the first image that is not processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person; and
outputting the type of processing, the processed positional information, and the unprocessed positional information for the new image.

## Amended claims

### Amended claims in accordance with Rule 137(2) EPC.

1. An information processing system comprising:
a processor configured to:
use an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is instructed to be processed, and unprocessed positional information representing a position of a feature portion in the first image that is instructed not to be processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person, wherein the feature portion instructed to be processed and the feature portion instructed not to be processed in the first image are of a same type; and
output the type of processing, the processed positional information, and the unprocessed positional information for the new image.

2. The information processing system according to claim 1, wherein the processor is configured to:
output the type of processing, the processed positional information, and the unprocessed positional information for the new image together with the new image before the processing.

3. The information processing system according to claim 2, wherein the processor is configured to:
not execute image processing represented by the estimated type of processing with respect to a position representing the feature portion of the person in the new image represented by the estimated unprocessed positional information, and execute image processing represented by the estimated type of processing with respect to a position representing the feature portion of the person in the new image represented by the estimated processed positional information; and
further output the processed new image.

4. The information processing system according to any one of claims 1 to 3, wherein the estimation model is a model that is prepared for each person and that is trained through machine learning using only the plurality of training data including first images including the same person, and identification information for identifying the person included in the first image constituting the training data used for the machine learning is associated with each estimation model, and
the processor is configured to:
estimate the type of processing, the processed positional information, and the unprocessed positional information from the new image using the estimation model associated with the identification information of the person included in the new image.

5. The information processing system according to claim 4, wherein the processor is configured to:
superimpose and output a mark representing a position of the feature portion of the person in the new image represented by the estimated processed positional information and a position of the feature portion of the person in the new image represented by the estimated unprocessed positional information on at least one of the new image before the processing or the new image after the processing.

6. The information processing system according to claim 5, wherein the processor is configured to:
output a first mark that is the mark representing the position of the feature portion of the person in the new image represented by the estimated unprocessed positional information and a second mark that is the mark representing the position of the feature portion of the person in the new image represented by the estimated processed positional information, in different display forms.

7. The information processing system according to claim 6, wherein the processor is configured to:
in a case where a predetermined operation for the first mark is received from a user, change the first mark in which the predetermined operation is performed to the second mark and change the unprocessed positional information associated with the mark changed from the first mark to the second mark to the processed positional information; and
in a case where the predetermined operation for the second mark is received from the user, change the second mark in which the predetermined operation is performed to the first mark and change the processed positional information associated with the mark changed from the second mark to the first mark to the unprocessed positional information.

8. The information processing system according to claim 7, wherein the processor is configured to:
in a case where another new image including the same person as the person included in the new image in which the predetermined operation is performed is received, carry over a setting status of the first mark and the second mark in the new image in which the predetermined operation is performed to the other new image.

9. The information processing system according to any one of claims 5 to 8, wherein the processor is configured to:
output the new image on which a character string representing the position of the feature portion of the person in the new image associated with the mark is superimposed together with the mark.

10. The information processing system according to any one of claims 5 to 9, wherein the processor is configured to:
identify an attribute of the feature portion of the person in the new image from the new image; and
superimpose and output the mark whose display form is changed for each attribute on at least one of the new image before the processing or the new image after the processing.

11. The information processing system according to claim 10, wherein the processor is configured to:
superimpose and output the mark corresponding to the attribute having a largest number among attributes identified from the new image on at least one of the new image before the processing or the new image after the processing.

12. The information processing system according to claim 11, wherein the processor is configured to:
in a case where an output instruction to output the mark corresponding to another attribute different from the mark being output is received from a user, further superimpose and output the mark corresponding to the attribute having a next largest number after the attribute represented by the mark being output among the attributes identified from the new image, on at least one of the new image before the processing or the new image after the processing.

13. The information processing system according to any one of claims 4 to 12, wherein the processor is configured to:
in a case where the new image includes a plurality of persons, estimate the type of processing, the processed positional information, and the unprocessed positional information for each person from the new image using the estimation model in which the identification information of each person is associated with each person included in the new image.

14. The information processing system according to claim 13, wherein, in a case where the estimation model associated with the identification information of the person does not exist, the processor is configured to:
estimate the type of processing, the processed positional information, and the unprocessed positional information for a person included in the new image with which the identification information is not associated, using a standard estimation model, which is the estimation model that is trained through machine learning using the plurality of training data including the first images that include different persons, with respect to the person to whom the estimation model is not associated.

15. The information processing system according to any one of claims 1 to 14, wherein the processor is configured to:
perform additional processing on each of new images processed by using the estimation model in accordance with a predetermined common processing rule for each person included in the new image.

16. The information processing system according to any one of claims 1 to 15,
wherein the estimation model is a model that is trained through machine learning using the training data in which a degree of processing performed on the first image to obtain the second image is further associated with the first image, and
the processor is configured to:
estimate the type of processing, the degree of processing, the processed positional information, and the unprocessed positional information from the new image by using the estimation model; and
output the type of processing, the degree of processing, the processed positional information, and the unprocessed positional information for the new image.

17. An information processing program causing a computer to execute a process comprising:
using an estimation model that is trained through machine learning, using a plurality of training data that are generated based on each pair data in which a first image of a person before processing and a second image in which a feature portion of the person included in the first image is processed are associated with each other, and in which a type of processing performed on the first image to obtain the second image, processed positional information representing a position of the feature portion in the first image that is instructed to be processed, and unprocessed positional information representing a position of a feature portion in the first image that is instructed not to be processed are associated with the first image, to output the type of processing, the processed positional information, and the unprocessed positional information for the first image, to estimate the type of processing, the processed positional information, and the unprocessed positional information from a new image which is the first image not used in the machine learning of the estimation model and includes the person, wherein the feature portion instructed to be processed and the feature portion instructed not to be processed in the first image are of a same type; and
outputting the type of processing, the processed positional information, and the unprocessed positional information for the new image.
